# FASCICULE DE BREVET EUROPEEN

(11) **EP 2 169 992 B1**
(45) Date de publication et mention de la délivrance du brevet: **18.07.2012**
(21) Numéro de dépôt: 09171151.5
(22) Date de dépôt: 23.09.2009
(51) Int. Cl.: H04L 29/06, H04W 12/12, H04M 3/22

(54) **Détection de comportements anormaux d'utilisateurs de terminaux mobiles dans un réseau de télécommunications**
Erkennung von anormalen Verhaltensweisen zwischen Benutzern von mobilen Endgeräten in einem Telekommunikationsnetz
Detection of abnormal behaviour among users of mobile terminals in a telecommunications network

(30) Priorité: 30.09.2008 FR 0856555
(43) Date de publication de la demande: 31.03.2010
(73) Titulaire: Alcatel Lucent, 75007 Paris (FR)
(72) Inventeur: Ansiaux, Arnaud, 91620, NOZAY (FR); Papillon, Serge, 91620, NOZAY (FR)
(74) Mandataire: Sciaux, Edmond

(56) Documents cités:
- GB-A- 2 431 255
- US-A1- 2003 212 903
- US-A1- 2004 255 163

## Description

La présente invention concerne une analyse de communications via au moins un réseau de télécommunications dans une zone géographique donnée pour déterminer des communications qui correspondent à des comportements anormaux d'individus, tels que des membres d'une bande organisée ou d'un gang, par exemple lors de manifestations ou d'émeutes.

Certains groupes d'individus, tels que les membres d'une bande organisée ou d'un gang, utilisent de plus en plus les nouvelles technologies pour rendre plus efficaces leurs actions. En particulier, l'utilisation des terminaux mobiles en grande quantité donne la possibilité aux gangs d'être très mobiles et d'éluder les forces de police grâce aux communications rapides au moyen de ces terminaux mobiles.

Actuellement, les autorités gouvernementales ne disposent pas de solution adaptée pour pister des membres de gangs se déplaçant rapidement et échangeant différents types de communication.

Le document US 2003/212903 A1 décrit un système de détection de comportements anormaux d'applications IP dans un réseau d'entreprise. Le document GB 2 431 255 A décrit comme utiliser l'analyse comportementale afin de produire un profil "normal" et afin de générer un profil anormal en se basant sur une base de données de mesures de trafic déjà identifié comme étant anormal.

Un objectif de l'invention est de remédier aux inconvénients précédents en détectait en temps réel des comportements anormaux d'utilisateurs de terminaux mobiles dans une zone géographique donnée afin de lancer des actions à rencontre d'utilisateurs considérés comme suspects,

Pour atteindre cet objectif, un procédé pour analyser des comportements d'utilisateurs de terminaux mobiles qui sont présents dans une zone géographique donnée et qui sont rattachés à un réseau de télécommunications de type radiocommunication, comprenant les étapes suivantes dans un dispositif inclus dans le réseau de télécommunications :
recevoir une requête incluant des coordonnées de la zone géographique donnée depuis un serveur et un identificateur d'un modèle de référence,
récupérer des informations sur des communications relatives à des utilisateurs présents dans la zone géographique donnée,
produire un modèle de comportement pour chacun desdits utilisateurs en fonction des informations récupérées, et
comparer chaque modèle de comportement produit à un modèle de référence afin de déterminer une liste d'utilisateurs qui ont des modèles de comportement respectifs similaires au modèle de référence avec un taux d'estimation supérieur à un seuil prédéterminé, déterminer au moins un groupe d'utilisateurs qui ont communiqué entre eux parmi les utilisateurs appartenant à ladite liste, chaque utilisateur dans ledit groupe ayant communiqué avec au moins un autre utilisateur dans ledit groupe.

Avantageusement, dés que des actes malicieux ont été détectés dans une zone géographique donnée et que l'autorité gouvernementale assermentée a transmis un ordre à l'opérateur du réseau de télécommunications, tel qu'un ordre de géolocalisation, le dispositif analyse notamment la signalisation et les historiques de communications relatives à des utilisateurs dans la zone donnée et les compare à un modèle de comportement de référence décrivant un comportement anormal typique d'un utilisateur qui est par exemple membre d'un gang, afin d'éditer une liste de suspects ayant un comportement proche de ce comportement anormal et de transmettre cette liste à l'autorité gouvernementale ayant préalablement transmis l'ordre,

L'invention offre un moyen efficace à une autorité gouvernementale de réagir rapidement et efficacement à des situations urgentes de crise, en particulier dans le cas d'émeutes ou d'actes de gang où des délinquants utilisent leurs terminaux mobiles pour planifier leurs actions et améliorer leur mobilité. L'invention offre ainsi de nouvelles capacités pour aider à prendre une décision en situation de crise.

Plusieurs opérateurs de télécommunications peuvent exécuter ce procédé et transmettre leurs résultats à l'autorité gouvernementale de sorte que cette dernière corrèle ces résultats et présente une liste plus globale et plus précise de suspects.

Diverses opérations peuvent être lancées à l'encontre d'individus présents dans cette liste de suspects, telles que des opérations de géolocalisation ou d'interception des contenus de communications, ou encore des opérations de blocage de terminal mobile ou d'envoi de messages pour informer les suspects qu'ils ont été repérés et sommer ces derniers d'arrêter leurs actes. Il sera entendu qu'un utilisateur de terminal mobile présent dans la liste peut être distinct de la personne ayant initialement acheté le terminal mobile et ayant souscrit un abonnement auprès de l'opérateur.

Selon une autre caractéristique de l'invention, le procédé peut comprendre en outre les étapes suivantes :
récupérer des informations textuelles sur le contenu de communications relatives à au moins une partie des utilisateurs appartenant à ladite liste, et
comparer les informations textuelles récupérées à un modèle de langage afin de déterminer une autre liste d'utilisateurs dont les informations textuelles respectives sont similaires au modèle de langage avec un taux d'estivation supérieur à un seuil prédéterminé.

La liste d'utilisateurs peut être filtrée par une analyse sémantique du contenu de communications des utilisateurs par rapport au modèle de langage décrivant un contenu de communications considérées suspectes, afin d'éliminer de la liste les utilisateurs dont les informations textuelles diffèrent du modèle de langage et qui ne sont plus suspects.

La liste d'utilisateurs peut être également filtrée à l'aide d'information de géolocalisation des utilisateurs, afin d'éliminer de la liste les utilisateurs dont la position géographique est éloignée du lieu où des actes malicieux ont été détectés ou dont les déplacements ne correspondraient pas aux effets induits par les forces de police en présence dans la zone à surveillée.

L'invention concerne également un dispositif inclus dans un réseau de télécommunications pour analyser des comportements d'utilisateurs de terminaux mobiles qui sont présents dans une zone géographique donnée et qui sont rattachés au réseau de télécommunications de type radiocommunication comprenant :
des moyens pour recevoir une requête incluant des coordonnées de la zone géographique donnée depuis un serveur et un identificateur d'un modèle de référence,
des moyens pour récupérer des informations sur des communications relatives à des utilisateurs présents dans la zone géographique donnée,
des moyens pour produire un modèle de comportement pour chacun desdits utilisateurs en fonction des informations récupérées, et
des moyens pour comparer chaque modèle de comportement produit à un modèle de référence afin de déterminer une liste d'utilisateurs qui ont des modèles de comportement respectifs similaires au modèle de référence avec un taux d'estimation supérieur à un seuil prédéterminé, et des moyens pour déterminer au moins un groupe d'utilisateurs qui ont communiqué entre eux parmi les utilisateurs appartenant à ladite liste, chaque utilisateur dans ledit groupe ayant communiqué avec au moins un autre utilisateur dans ledit groupe.

L'invention concerne encore un serveur apte à communiquer avec au moins un dispositif inclus dans un réseau de télécommunications pour analyser des comportements d'utilisateurs de terminaux mobiles qui sont présents dans une zone géographique donnée et qui sont rattachés au réseau de télécommunications, caractérisé en ce qu'il comprend :
des moyens pour transmettre une requête incluant des coordonnées d'une zone géographique donnée et un identificateur d'un modèle de référence au dispositif afin que le dispositif récupère des informations sur des communications relatives à des utilisateurs présents dans la zone géographique donnée, produise un modèle de comportement pour chacun desdits utilisateurs en fonction des informations récupérées et compare chaque modèle de comportement produit à un modèle de référence pour déterminer une liste d'utilisateurs qui ont des modèles de comportement respectifs similaires au modèle de référence avec un taux d'estimation supérieur à un seuil prédéterminé, et des moyens pour déterminer au moins un groupe d'utilisateurs qui ont communiqué entre eux parmi les utilisateurs appartenant à ladite liste, chaque utilisateur dans ledit groupe ayant communiqué avec au moins un autre utilisateur dans ledit groupe, et
des moyens pour recevoir la liste d'utilisateurs et pour commander des actions à l'encontre des utilisateurs appartenant à la liste reçue parmi au moins des actions d'interception légale et de localisation.

Selon une autre caractéristique de l'invention, le serveur peut comprendre :
des moyens pour recevoir au moins deux listes d'utilisateurs respectivement depuis deux dispositifs inclus dans des réseaux de télécommunications respectifs, et
des moyens pour déterminer au moins un groupe d'utilisateurs qui ont communiqué entre eux parmi les utilisateurs appartenant aux deux listes reçues, chaque utilisateur dans ledit groupe ayant communiqué avec au moins un autre utilisateur dans ledit groupe.

Le groupe d'utilisateurs peut être filtré par une analyse sémantique du contenu de communications des utilisateurs par rapport à un modèle de langage décrivant un contenu de communications considérées suspectes, et peut être également filtré à l'aide de données de géolocalisation des utilisateurs.

La présente invention et les avantages qu'elle procure seront mieux compris au vu de la description ci-après faite en référence aux figures annexées, dans lesquelles:
- la figure 1 est un bloc-diagramme schématique d'un serveur de sécurité relié à au moins un dispositif de contrôle selon l'invention ; et
- la figure 2 est un algorithme d'un procédé d'analyse de comportement d'utilisateurs de terminaux mobiles selon l'invention.

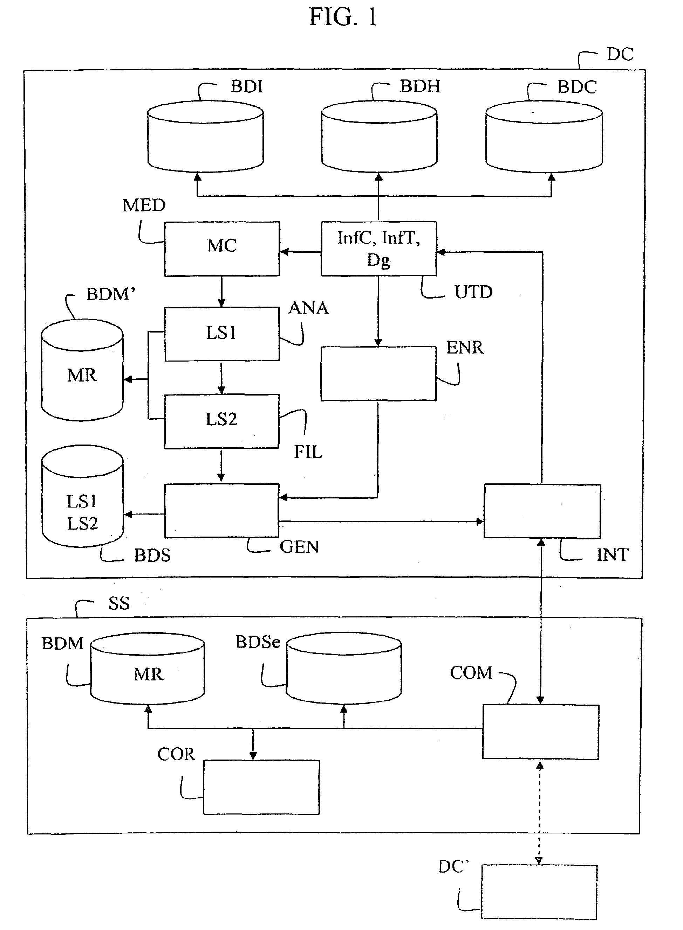

En référence à la figure 1, un système de surveillance selon une réalisation de l'invention comprend un serveur de sécurité SS et au moins un dispositif de contrôle DC intégré dans un réseau de télécommunications, reliés entre eux par une liaison sécurisée filaire ou sans fil.

Le serveur de sécurité peut être géré par une autorité gouvernementale et peut être relié à au moins un autre dispositif de contrôle DC' intégré dans un autre réseau de télécommunications via une autre liaison sécurisée.

Le serveur de sécurité SS comprend un module de communication COM et un module de corrélation COR. Le serveur de sécurité SS est lié à une base de données de modèles BDM et à une base de données de seuils BDSe, qui sont chacune intégrée dans ce dernier ou incorporée dans un serveur de gestion de base de données relié au serveur SS par une liaison locale ou distante.

Le module de communication COM relie le serveur de sécurité SS à chacun des dispositifs de contrôle, de manière à ce que le serveur puisse communiquer avec et surveiller chaque réseau de télécommunications dans lequel est intégré un dispositif de contrôle. Le module de corrélation COR corrèle les informations fournies par chacun des dispositifs de contrôle.

La base de données de modèles BDM comprend des informations relatives à l'invention, telles que des modèles de comportement d'utilisateurs de terminaux mobiles, en particulier, des utilisateurs ayant appartenu à un gang et dont le comportement lors d'actes commis par le gang diffère sensiblement du comportement d'un utilisateur ordinaire. Par la suite, ces modèles de comportement sont désignés modèles de référence MR. A titre d'exemple, un modèle de référence MR peut être représenté de la manière descriptive suivante : "de courtes communications par voix ou par message sms, répétées à de courts intervalles de temps, avec des appels entrants depuis et sortants vers les mêmes numéros de téléphones". La base de données de modèles BDM comprend en outre des modèles de langage ML décrivant le contenu de communications considérées suspectes, tel que l'utilisation de certaines expressions dans ces communications. Des modèles de référence et de langage peuvent être produits par l'autorité en fonction d'un historique de communications fourni par des opérateurs de télécommunications. Par exemple, un modèle de référence peut être produit par une autorité gouvernementale après une analyse approfondie des communications dans une situation spécifique de crise.

La base de données de seuils BDSe comprend des seuils associés à des instructions d'actions à prendre, Un seuil peut être relatif à un taux d'estimation sur la correspondance entre un modèle de comportement construit à partir d'informations InfC sur des communications et un modèle de référence. Par exemple, une action telle qu'une interception en temps réel de communications peut être lancée si des informations de communications InfC, décrivent un modèle de comportement correspondant à un modèle de référence intitulé "dégradation par gang" avec un taux d'estimation supérieur à 75%.

Le dispositif de contrôle DC est géré par l'opérateur du réseau de télécommunications qui est par exemple un réseau de radiocommunication. Le dispositif de contrôle DC comprend une interface de communication INT, une unité de traitement de données UTD, un module de médiation MED, un module d'analyse de comportement ANA, un module de filtrage FIL, un module de génération de rapport GEN et un module d'enrichissement d'informations ENR.

Le dispositif de contrôle DC est lié à une base de données de modèles BDM' et à une base de données de suspects BDS, qui sont chacune intégrée dans ce dernier ou incorporée dans un serveur de gestion de base de données relié au dispositif DC par une liaison locale ou distante.

La base de données de modèles BDM' comprend des modèles de référence MR et des modèles de langage ML. La base de données BDM' est une duplication en tout ou partie de la base de données de modèles BDM du serveur de sécurité SS. Par exemple, la base de données BDM' est mise à jour à partir de la base de données BDM sous la commande du serveur de sécurité SS. La base de données de suspects BDS comprend des listes de suspects, et éventuellement des informations relatives à chacun des suspects présents dans les listes.

Le dispositif de contrôle DC est également lié à une base de données d'informations d'utilisateurs BDI, à une base de données d'historique de communications BDH et une base de données de communications en temps réel BDC, qui sont chacune intégrée dans ce dernier ou incorporée dans un serveur de gestion de base de données relié au dispositif DC par une liaison locale ou distante.

La base de données d'informations d'utilisateurs BDI contient toutes les informations sur les clients de l'opérateur du réseau de télécommunications que ce dernier détient, telles que le contrat d'abonnement ou le profil d'utilisateur. La base de données d'historique de communications BDH contient toutes les informations techniques de télécommunications sur les appels que l'opérateur peut légalement mémoriser, telles que le type de communication (voix, message), les numéros qui font partie d'une communication, l'heure de début et la durée d'une communication. La base de données de communications en temps réel BDC contient des informations techniques sur une communication en cours, telles que le type et la durée de la communication et les numéros impliqués dans la communication, ainsi que des informations textuelles relatives au contenu de la communications.

L'interface de communication INT gère des requêtes transmises par le module de communication COM du serveur de sécurité SS. L'interface INT lance des sessions d'analyse, plusieurs requêtes pouvant être transmises lors d'une même session d'analyse.

L'unité de traitement de données UTD analyse chaque requête et communique avec chacune des bases de données BDI, BDH et BDC pour récupérer des informations de communications InfC à partir de ces bases de données, informations qui sont nécessaires au traitement de la requête.

Le module de médiation MED organise les flux de données issus de l'unité UTD et sert de médiation entre l'unité UTD et les modules d'analyse de comportement ANA et de filtrage FIL, c'est-à-dire présente les informations de communications InfC récupérées par l'unité UTD dans un format interprétable par les modules ANA et FIL.

Le module de médiation MED construit des modèles de comportement en fonction des informations de communications InfC récupérées par l'unité UTD et les modèles de comportement peuvent être comparés aux modèles de référence mémorisés dans la base de données de modèles BDM. Un modèle de comportement peut être construit pour chaque utilisateur de terminal mobile du réseau de télécommunications. Par exemple, les modèles de comportement construits et les modèles de référence ont des champs de données de même type, les champs de modèles de référence étant initialement remplis par le serveur de sécurité SS et les champs de modèles de comportement construits étant remplis par le module de médiation MED à partir d'informations issues des bases de données BDI, BDH et BDC.

Plus particulièrement, selon les instructions des requêtes reçues depuis le serveur de sécurité, le module de médiation MED construit des modèles de comportement MC et les transmet au module d'analyse ANA pour être comparés à des modèles de référence MR, et transmet des informations textuelles InfT, telles que des mots clés, trouvées dans la base de données BDC au module de filtrage FIL pour être comparées à des modèles de langage ML.

Le module d'analyse de comportement ANA analyse des modèles de comportement MC produits par le module MED pour vérifier si ces derniers correspondent à des modèles de référence MR mémorisés dans la base de données de modèles BDM'. A chaque utilisateur et donc à chaque modèle de comportement MC, le module d'analyse ANA attribue un taux d'estimation reflétant la similarité entre le modèle de comportement MC de l'utilisateur et le modèle de référence MR sélectionné pour l'analyse. Par exemple, le taux d'estimation est déterminé en comparant chacun des champs de données de même type relatifs aux modèles de comportement et de référence et le taux d'estimation est incrémenté lorsque ces champs ont des contenus identiques ou similaires. Le module d'analyse ANA fournit une première liste de suspects LS1 incluant des références des utilisateurs dont le comportement correspond à un modèle de référence MR avec un taux d'estimation donné. En outre, le module d'analyse ANA peut fournir une première liste LS1 plus précise dans laquelle des suspects sont considérés comme appartenant à un ou plusieurs groupes de suspects. Un groupe de suspects peut être défini par des suspects qui se sont appelés ou ont communiqué entre eux, suite à une analyse des appels entrants et sortants relatifs à chaque suspect. Il peut être considéré que chaque utilisateur dans le groupe a communiqué avec au moins un autre utilisateur dans groupe. Par conséquent, la liste LS1 contient des suspects qui peuvent appartenir à différents groupes et des suspects qui n'appartiennent à aucun groupe. Le module d'analyse peut fournir un modèle de comportement de groupe en fonctions des modèles de comportement MC des suspects appartenant à un même groupe.

Le module de filtrage FIL analyse des informations textuelles InfT, telles que des mots clés, transmises par le module MED pour vérifier si ces dernières correspondent à des modèles de langage ML mémorisés dans la base de données de modèles BDM'. Par exemple, les informations textuelles analysées InfT sont issues de communications relatives à des utilisateurs présents dans la première liste de suspects LS1 et peuvent être par exemple la copie du texte contenu dans une message de communication, ou bien le texte transcrit d'une communication vocale au moyen de techniques de reconnaissance vocale ou de translation voix à texte. Ces informations textuelles InfT peuvent être destinées à filtrer cette première liste de suspects. A chaque utilisateur, le module de filtrage FIL peut également attribuer un taux d'estimation reflétant la concordance entre les informations textuelles InfT de l'utilisateur et le modèle de langage ML sélectionné pour l'analyse. Le module de filtrage FIL fournit une deuxième liste de suspects LS2 incluant des références d'utilisateurs qui pétaient éventuellement précédemment inclus dans la première liste de suspects LS1 et qui ont établi des communications dont le contenu correspond à un modèle de langage ML avec un taux d'estimation donné. Par exemple, le taux d'estimation est donnée par un algorithme d'analyse sémantique des informations textuelles InfT des utilisateurs en comparant la signification de mots utilisés par les suspects à celle des mots contenus dans le modèle de langage.

Le module de génération de rapport GEN convertit les première et deuxième listes de suspects au format souhaité par l'opérateur gérant le dispositif de contrôle. Par ailleurs, chaque liste de suspects auxquels sont respectivement attribués des taux d'estimations est mémorisée dans la base de données de suspects BDS.

Le module d'enrichissement d'informations ENR fournit des informations que l'opérateur du réseau de télécommunications détient sur chaque suspect d'une liste, par exemple un profil d'utilisateur, et mémorise ces informations dans la base de données BDS en les attachant à la liste.

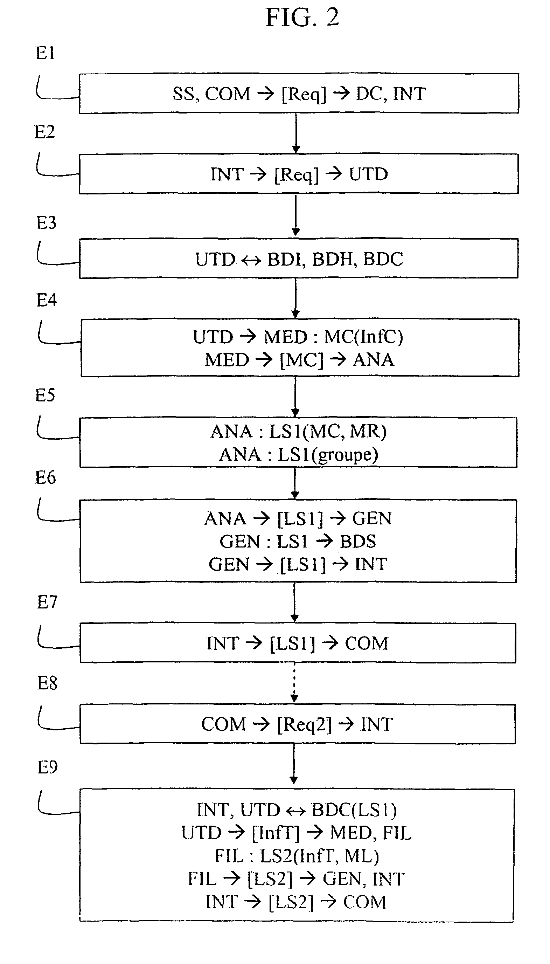

En référence à la figure 2, un procédé d'analyse de comportements d'utilisateurs de terminaux mobiles selon une réalisation de l'invention comprend des étapes E1 à E9 exécutées automatiquement dans le système de surveillance selon l'invention. Le procédé est décrit ci-après par rapport au serveur de sécurité qui est en communication avec au moins le dispositif de contrôle DC.

Initialement, un évènement, tels que des troubles causés par l'activité d'un gang, est détecté dans une zone géographique donnée par une autorité gérant le serveur de sécurité SS.

A l'étape E1, le module de communication COM du serveur de sécurité SS transmet à l'interface de communication INT du dispositif de contrôle DC une requête Req pour analyser des communications dans la zone donnée, notamment tout type de radiocommunications établies dans le réseau de télécommunications dans lequel est inclus le dispositif DC.

A l'étape E2, en fonction du contenu de la requête, l'interface de communication INT initialise une session au cours de laquelle plusieurs autres requêtes peuvent être reçues depuis le serveur de sécurité. Par exemple, la requête Req contient des coordonnées de la zone donnée, un intervalle de temps prédéfini correspondant par exemple à une période d'observation, et un ou plusieurs identificateurs de modèles de référence. Une session peut être alors définie par la zone donnée et l'intervalle de temps prédéfini, de sorte qu'une session corresponde à une analyse de communications relatives à la zone donnée pendant l'intervalle de temps prédéfini.

Par exemple, si le gang s'est déplacé dans une autre zone, le serveur de sécurité SS transmet à l'interface de communication INT une autre requête désignant l'autre zone, avec un autre intervalle de temps, et correspondant ainsi à une autre session.

A titre d'exemple, une requête Req comprend des éléments définissant un périmètre ou une zone géographique à observer, ces éléments pouvant être issus d'un système de positionnement GPS ("Global Position System" en anglais) décrivant par exemple une coordonnée avec un rayon ou plusieurs coordonnées formant une zone polygonale. La requête peut comprendre également une indication temporelle définissant une durée pendant laquelle des troubles ont eu lieu.

D'autres requêtes peuvent être reçues à tout moment pendant la session, telle qu'une requête pour commencer ou terminer une analyse sémantique de contenu de communications relatives à certains suspects.

L'interface INT fonctionne donc en temps réel et peut suivre l'évolution de tout acte des membres du gang.

L'interface INT transmet la requête reçue Req à l'unité de traitement de données UTD.

A l'étape E3, l'unité de traitement de données UTD traite la requête et interroge au moins l'une des bases de données BDI, BDH et BDC en fonction des instructions et du contenu de la requête.

L'unité UTD récupère des informations de communications InfC relatives aux utilisateurs qui sont présents dans la zone donnée et qui sont rattachés au réseau de télécommunications, que ce soient des informations mémorisées dans des historiques de communications passées ou des informations en temps réel sur des communications en cours. L'unité UTD gère également toute nouvelle action induite par la réception d'une nouvelle requête lors de la même session, telle qu'une requête de géolocalisation ou d'obtention d'informations sur certains utilisateurs.

Par exemple, la requête contient un identificateur d'un modèle de référence MR et des instructions pour établir une liste de suspects dont le comportement correspond à ce modèle MR,

Selon un autre exemple, la requête contient un identificateur d'un modèle de référence MR, un identificateur d'un modèle de langage ML et des instructions pour établir dans un premier temps une liste de suspects dont le comportement correspond au modèle de référence MR puis pour filtrer dans un deuxième temps ladite liste afin de ne garder que les suspects utilisant des mots similaires aux mots contenus dans le modèle de langage ML. En variante, cette requête contient des mots clés au lieu d'un identificateur d'un modèle de langage afin d'identifier les suspects utilisant des mots similaires aux mots clés.

En particulier, pour la production d'une première liste de suspects LS1, l'unité UTD peut interroger principalement la base de données d'historique BDH, tandis que pour la production d'une deuxième liste de suspects LS2, l'unité UTD peut interroger principalement la base de données de communications en temps réel BDC.

Dans la suite de la description et en tant qu'exemple de référence, il est considéré que la requête Req ne contient qu'un identificateur d'un modèle de référence MR afin de produire dans un premier temps une première liste de suspects LS1 par le module d'analyse de comportement ANA. Une autre requête sera reçue dans un deuxième temps afin de produire une deuxième liste de suspects LS2 par le module de filtrage FIL.

A l'étape E4, l'unité UTD transmet les informations de communications InfC récupérées des bases de données avec les instructions de la requête au module de médiation MED afin que ce dernier produise un modèle de comportement MC pour chaque utilisateur en fonction des informations récupérées.

Le module de médiation MED transmet alors les modèles de comportement MC au module d'analyse de comportement ANA.

A l'étape E5, le module d'analyse de comportement ANA applique les modèles de comportement MC à un algorithme prédéterminé pour les comparer au modèle de référence MR identifié dans la requête Req et mémorisé dans la base de données de modèles BDM et pour déterminer si des utilisateurs ont des comportements suspects.

Le module d'analyse de comportement ANA attribue un taux d'estimation à chaque modèle de comportement MC, le taux d'estimation traduisant la correspondance entre le modèle de comportement et le modèle de préférence. Le module ANA produit une première liste LS1 de suspects qui ont des modèles de comportements similaires au modèle de référence avec un taux d'estimation supérieur à un seuil prédéterminé, par exemple de 75%.

Optionnellement, le module d'analyse ANA analyse les modèles de comportement de chaque suspect de la première liste afin de déterminer des suspects qui ont communiqué entre eux et associer ces suspects à des groupes de suspects et éventuellement des sous-groupes de suspects. A titre d'exemple, la première liste LS1 contient cinq personnes nommées X1, X2, X3, X4 et X5, et le module d'analyse ANA établit que X2, X3 et X4 ont communiqué entre eux et que X2 et X5 ont communiqué entre eux. Le module d'analyse associe X2, X3, X4 et X5 à un groupe, X2, X3 et X4 à un sous-groupe, et X2 et X5 à un autre sous-groupe.

A l'étape E6, le module d'analyse ANA transmet la première liste LS1 au module de génération de rapport GEN qui la retransmet à l'interface de communication INT et la mémorise dans la base de données de suspects BDS, après avoir éventuellement converti la liste dans un autre format.

A l'étape E7, l'interface de communication INT transmet la première liste LS1 au module de communication COM du serveur de sécurité SS. Le module de communication COM peut commander de nouvelles actions suite à l'analyse de la première liste LS1.

Par exemple, le module COM peut transmettre une nouvelle requête au dispositif DC afin de récupérer des informations sur certains suspects présents dans la première liste LS1 à partir de la base de données BDI. En particulier, si des groupes de suspects sont établis dans la première liste, le module COM peut sélectionner des suspects appartenant à au moins un groupe et éliminer des suspects isolés n'appartenant à aucun groupe, et requérir des informations sur ces suspects sélectionnés.

Chaque action commandée par le serveur SS peut être exécutée automatiquement au moyen de la base de données de seuil BDSe. Par exemple, une action pour récupérer des informations sur certains utilisateurs présents dans la première liste LS1 ou pour filtrer la première liste LS1 en fonction du contenu de communications établies par les suspects peut être lancée seulement à l'encontre des suspects ayant un modèle de comportement avec un taux d'estimation supérieur à 85%, alors que tous les suspects de la première liste ont un modèle de comportement avec un taux d'estimation au moins supérieur à 75%. Ainsi, de nouvelles analyses peuvent être effectuées que pour une partie des suspects de la première liste LS1.

Selon l'exemple de référence, le module COM peut transmettre un ordre d'interception légale et d'écoute des communications établies par les utilisateurs présents dans la première liste LS1.

A cette fin, le module COM transmet une autre requête Req2 à l'interface de communication INT, à l'étape E8. La requête Req2 contient un identificateur d'un modèle de langage ML et des instructions pour écouter toutes les communications établies par les suspects de la première liste LS1. L'opérateur de télécommunications active ainsi des fonctionnalités d'interception légale de manière à mémoriser des informations textuelles InfT sur les communications suspectes dans la base de données BDC. Il est considéré que les analyses effectuées en relation avec la requête Req2 appartiennent aussi à la session initialisée lors de la réception de la première requête Req.

A l'étape E9, le dispositif de contrôle DC exécute une succession d'étapes similaires aux étapes E3 à E7 afin de produire une deuxième liste de suspects LS2 en fonction du modèle de langage ML et des informations mémorisées dans la base de données de communications en temps réel BDC.

En bref, l'interface de communication INT transmet la requête reçue Req2 à l'unité de traitement de données UTD qui interroge la base de données BDC. L'unité UTD transmet toutes les informations textuelles InfT récupérées de la base BDC et relatives à chacun des suspects de la première liste LS1 avec les instructions de la requête au module de médiation MED afin que ce dernier les retransmette au module de filtrage FIL.

Le module de filtrage FIL applique les informations textuelles InfT à un algorithme prédéterminé d'analyse sémantique pour les comparer au modèle de langage identifié dans la requête Req2 et mémorisé dans la base de données de modèles BDM et attribue un taux d'estimation à chaque suspect en fonction du résultat de l'analyse sémantique. Le module de filtrage FIL élimine de la première liste LS1 les suspects dont les informations textuelles InfT diffèrent du modèle de langage ML afin de produire une deuxième liste LS2 de suspects dont les informations textuelles InfT sont similaires au modèle de langage ML avec un taux d'estimation supérieur à un seuil prédéterminé, par exemple de 75%.

Le module de filtrage FIL transmet la deuxième liste LS2 au module de génération de rapport GEN qui la mémorise dans la base de données de suspects BDS et la retransmet à l'interface de communication INT, après avoir éventuellement converti la liste dans un autre format. L'interface INT transmet la deuxième liste LS2 au module de communication COM du serveur de sécurité SS qui peut à nouveau commander de nouvelles actions suite à l'analyse de la deuxième liste LS2.

Optionnellement, avant l'étape E9, le serveur de sécurité SS sélectionne certains suspects de la première liste LS1 et transmet une requête de géolocalisation au dispositif DC pour les suspects sélectionnés. La géolocalisation est par exemple exécutée par triangulation, La géolocalisation permet de distinguer des suspects qui sont en déplacement et par ailleurs de déterminer la vitesse de déplacement de certains suspects. Lorsqu'un suspect a une vitesse élevée de déplacement, par exemple supérieure à un seuil prédéfini, il peut être considéré que le suspect a un comportement anormal, tel que celui d'un membre d'un gang. Le dispositif DC transmet alors au serveur de sécurité SS des données de géolocalisation Dg relatives aux suspects sélectionnés.

Optionnellement, le dispositif DC utilise des informations de communications InfC et des données de géolocalisation Dg relatives aux utilisateurs pour établir la première liste de suspects LS1. A cette fin, à l'étape E3, l'unité UTD récupère des données de géolocalisation Dg en plus des informations de communications InfC relatives aux utilisateurs qui sont présents dans la zone donnée. A l'étape E4, le module de médiation MED produit un modèle de comportement pour chaque utilisateur en fonction à la fois des informations de communications InfC et des données de géolocalisation Dg. A l'étape E5, le module d'analyse ANA compare chaque modèle de comportement à un modèle de référence plus complexe prenant en compte des informations de communications et des données de géolocalisation, De même, le module d'analyse attribue un taux d'estimation à chaque modèle de comportement et produit une liste LS1 de suspects qui ont des modèles de comportements similaires au modèle de référence avec un taux d'estimation supérieur à un seuil prédéterminé. Cette liste LS1 a ainsi le même rôle que la première liste de suspect LS1, en étant déjà plus précise puisqu'elle permet d'éliminer les utilisateurs dont la position géographique ne correspond pas au modèle de référence utilisé.

Le procédé décrit précédemment peut être exécuté par le serveur de sécurité SS également en collaboration avec au moins un autre dispositif de contrôle DC' intégré dans un autre réseau de télécommunications, En effet, les membres d'un gang peuvent utiliser plusieurs réseaux de télécommunications. Dans ce cas, le module de corrélation COR corrèle toutes les informations, dont les listes de suspects LS1, reçues depuis les différents dispositifs de contrôle. Les informations reçues depuis chaque dispositif de contrôle correspondent à une zone géographique donnée et un intervalle de temps prédéfini et la corrélation entre ces informations est exécutée lorsque les zones géographiques données et les intervalles de temps prédéfinis sont identiques ou se recouvrent partiellement,

Comme décrit précédemment, chaque liste de suspect peut contenir des groupes de suspects. Pour une meilleure compréhension de l'invention, un groupe de suspects d'une liste LS1 est qualifié de groupe "intra-opérateur. Le module de corrélation COR peut déterminer un ou plusieurs groupes "inter-opérateur" de suspects à partir des informations relatives aux suspects des différentes listes. En particulier, si au moins un suspect d'un groupe "intra-opérateur" a communiqué avec au moins un suspect d'un autre groupe "intra-opérateur", alors le module de corrélation peut déterminer un groupe "inter-opérateur" qui est l'union des deux groupes "intra-opérateur".

A titre d'exemple, le serveur de sécurité SS collabore avec un réseau A et un réseau B. Le serveur SS reçoit du réseau A une liste de suspects contenant cinq suspects nommés A1, A2, A3, A4 et A5, et reçoit du réseau B une liste de suspects contenant cinq suspects nommés B1, B2, B3, B4 et B5.

Les suspects A1 et A2 appartiennent à un groupe intra-opérateur, les suspects A3 et A4 appartiennent à un autre groupe intra-opérateur, et le suspect A5 n'appartient à aucun groupe. Les suspects B1, 82, B3, B4 et B5 appartiennent tous à un même groupe intra-opérateur.

Si le module COR établit qu'au moins l'un des suspects B1, B2, B3, B4 et B5 a communiqué avec au moins l'un des suspects A1 et A2, alors le module COR détermine un groupe "inter-opérateur" comprenant les suspects B1, B2, B3, B4 et B5, et les suspects A1 et A2. Si d'autre part, au moins l'un des suspects B1 B2, B3, B4 et B5 a communiqué avec au moins l'un des suspects A3 et A4, alors le groupe "inter-opérateur" comprend également les suspects A3 et A4.

Lorsque le module COR a établi au moins un groupe "inter-opérateur", le module COR peut commander au module de communication COM de transmettre une nouvelle requête à chaque dispositif de contrôle des réseaux de télécommunications utilisés par les suspects appartenant au groupe "inter-opérateur" afin de récupérer d'autres informations sur ces suspects.

Par exemple, le serveur de sécurité SS transmet à chaque dispositif de contrôle une requête de géolocalisation dans un premier temps, puis une requête d'écoute dans un deuxième temps, afin d'éliminer éventuellement des suspects du groupe "inter-opérateur".

Le module COR peut produire un modèle de comportement de groupe en fonctions des modèles de comportement MC des suspects appartenant à un même groupe, par exemple un groupe "inter-opérateur", les modèles de comportement MC étant transmis par chaque réseau de télécommunications au serveur SS sur requête de ce dernier. Ce modèle de comportement de groupe permet au serveur SS d'avoir une vision globale du comportement des suspects en corrélant les informations transmises par chaque réseau de télécommunications. Ce modèle de comportement de groupe peut être comparé à un modèle de référence par exemple pour suivre l'évolution du comportement global du groupe de suspects.

La requête de géolocalisation permet de distinguer des suspects qui sont en déplacement. Un lien de cause à effet peut être établi en recourant à des forces de police. Par exemple, des forces de police présentes dans la zone géographique donnée peuvent se déplacer dans la zone donnée et provoquer le déplacement des suspects. Par conséquent, la géolocalisation permet d'observer tout déplacement anormal d'un ou de plusieurs suspects suite au déplacement des forces de police. Après analyse des données de géolocalisation, les suspects se déplaçant de manière anormale peuvent être mis sur écoute. Il est à noter toutefois qu'un suspect ne se déplaçant pas peut être également mis sur écouter : en effet, ce suspect immobile peut communiquer avec des suspects en déplacement et peut avoir un rôle de vigie.

La requête de géolocalisation permet en outre de localiser de manière précise un suspect et d'en déduire si sa position géographique peut avoir un lien avec les troubles observés dans la zone géographique donnée. Lorsqu'un groupe de suspects est déterminé, la géolocalisation de ces suspects permet d'observer une division du groupe et d'anticiper les déplacements des suspects.

La requête d'écoute permet de s'assurer qu'un suspect est bien membre d'un gang ou d'éliminer un suspect qui est indépendant de troubles observés dans la zone géographique donnée, en analysant le contenu des communications relatives au suspect.

Ces différentes requêtes permettent notamment d'innocenter un utilisateur de terminal mobile se trouvant dans la zone géographique donnée qui observe en se déplaçant les troubles causés par les membres d'un gang et qui communique avec un ou plusieurs amis pour raconter les troubles observés.

En pratique, une mise sur écoute de suspects est exécutée en dernier recours ou pour s'assurer que les suspects sur écoute sont effectivement membres du gang, en raison de la complexité et du coût de la mise sur écoute.

Un exemple d'utilisation du système de surveillance selon une réalisation de l'invention est décrit ci-après. Initialement, des troubles causés par l'activité d'un gang sont détectés dans une zone donnée dans une agglomération. La police déploie des unités dans cette zone donnée mais observe des difficultés pour attraper des membres du gang, à cause de leur mobilité et de leur connaissance de la zone donnée.

La police, via l'autorité gouvernementale gérant le serveur de sécurité, transmet à différents dispositifs de contrôle une requête de "session de pistage" pour analyser toutes les communications dans la zone donnée susceptibles de correspondre à des comportements spécifiques d'actes de gang. Chaque opérateur utilise le dispositif de contrôle pour récupérer toutes les informations pertinentes sur les communications établies dans la zone donnée à contrôler. Les informations sont automatiquement analysées par le dispositif en utilisant les algorithmes d'analyse de comportement pour déterminer quelles communications dans la zone donnée peuvent être attribuées à des membres du gang. Chaque opérateur fournit sa propre liste de suspects à la police, en ayant éventuellement distingué un ou plusieurs groupes de suspects.

La police corrèle les informations des listes reçues depuis les différents opérateurs et détermine qu'une dizaine d'utilisateurs situés dans la zone donnée sont suspectés de participer à des actes d'un gang. Cette dizaine de suspects utilisent des réseaux de télécommunications différents et sont considérés comme appartenant à un unique groupe "inter-opérateur". Des informations complémentaires fournies par les opérateurs sur les suspects permettent à la police de découvrir que quelques suspects sont déjà connus pour avoir commis d'autres actes malveillants. De plus, la police constate que l'un des suspects a appelé une personne Y dans une autre zone avec un comportement de communication suspect.

La police transmet alors deux nouvelles requêtes. Une première requête est transmise pour déclencher l'interception de communications relatives aux suspects. Une deuxième requête est transmise pour déclencher une autre "session de pistage" dans ladite autre zone où la personne Y est localisée.

Les résultats de la deuxième requête peuvent fournir des informations utiles pour anticiper des actes malveillants ou des émeutes dans cette zone et pour déployer des forces de police en avance pour dissuasion.

Par ailleurs, l'interception des communications permet à la police d'anticiper les déplacements des membres du gang dans la zone donnée et de les arrêter.

Selon un autre exemple, une manifestation à risque est prévue dans une zone géographique donnée pendant une plage horaire prédéterminée. Le serveur de sécurité peut transmettre une requête à différents dispositifs de contrôle pour anticiper tout débordement éventuel occasionné lors de la manifestation. A cette fin, la requête peut inclure des indications relatives à la zone donnée et la plage horaire, ainsi que des identificateurs de modèle de référence et de modèle de langage. Chaque opérateur reçoit ainsi un ordre d'interception légale avant le début de la manifestation pour écouter toute communication établie sur tout le parcours de la manifestation.

## Revendications

1. Procédé pour analyser des comportements d'utilisateurs de terminaux mobiles qui sont présents dans une zone géographique donnée et qui sont rattachés à un réseau de télécommunications de type radiocommunication, **caractérisé en ce qu'**il comprend les étapes suivantes dans un dispositif (DC) inclus dans le réseau de télécommunications :
recevoir (E1) une requête (Req) incluant des coordonnées de la zone géographique donnée depuis un serveur (SS) et un identificateur d'un modèle de référence (MR),
récupérer (E3) des informations (InfC) sur des communications relatives à des utilisateurs présents dans la zone géographique donnée,
produire (E4) un modèle de comportement (MC) pour chacun desdits utilisateurs en fonction des informations récupérées,
comparer (E5) chaque modèle de comportement produit (MC) à un modèle de référence (MR) afin de déterminer une liste (LS1) d'utilisateurs qui ont des modèles de comportement respectifs similaires au modèle de référence avec un taux d'estimation supérieur à un seuil prédéterminé, et
déterminer au moins un groupe d'utilisateurs qui ont communiqué entre eux parmi les utilisateurs appartenant à ladite liste (LS1), chaque utilisateur dans ledit groupe ayant communiqué avec au moins un autre utilisateur dans ledit groupe.

2. Procédé conforme à la revendication 1, selon lequel lesdites informations (InfC) sont issues d'une base de données comprenant au moins des informations d'historiques de communications et des informations sur les utilisateurs du réseau de télécommunications.

3. Procédé conforme à la revendication 1 ou 2, selon lequel, en réponse à une requête transmise par le serveur (SS), le dispositif (DC) récupère des données de géolocalisation (Dg) relatives à au moins une partie des utilisateurs appartenant à ladite liste (LS1) et élimine de la liste des utilisateurs en fonction de la position géographique des utilisateurs déduite des données de géolocalisation récupérées.

4. Procédé conforme à la revendication 1 ou 2, comprenant en outre une récupération de données de géolocalisation (Dg) relatives aux utilisateurs présents dans la zone géographique donnée, et selon lequel le modèle de comportement (MC) est produit pour chacun desdits utilisateurs en fonction en outre des données de géolocalisation (Dg).

5. Procédé conforme à l'une des revendications 3 et 4, comprenant en outre les étapes suivantes dans le dispositif (DC), en réponse à une requête transmise par le serveur (SS) :
récupérer (E9) des informations textuelles (InfT) sur le contenu de communications relatives à au moins une partie des utilisateurs appartenant à ladite liste (LS1), et
comparer les informations textuelles récupérées à un modèle de langage (ML) afin de déterminer des utilisateurs dont les informations textuelles respectives sont similaires au modèle de langage avec un taux d'estimation supérieur à un seuil prédéterminé.

6. Procédé conforme à la revendication 5, selon lequel les informations textuelles récupérées (InfT) sont comparées à un modèle de langage par une analyse sémantique.

7. Dispositif (DC) inclus dans un réseau de télécommunications pour analyser des comportements d'utilisateurs de terminaux mobiles qui sont présents dans une zone géographique donnée et qui sont rattachés au réseau de télécommunications de type radiocommunication, **caractérisé en ce qu'**il comprend :
des moyens (INT) pour recevoir une requête (Req) incluant des coordonnées de la zone géographique donnée depuis un serveur (SS) et un identificateur d'un modèle de référence (MR)
des moyens (UTD) pour récupérer des informations (InfC) sur des communications relatives à des utilisateurs présents dans la zone géographique donnée,
des moyens (MED) pour produire un modèle de comportement (MC) pour chacun desdits utilisateurs en fonction des informations récupérées,
des moyens (ANA) pour comparer chaque modèle de comportement produit à un modèle de référence (MR) afin de déterminer une liste (LS1) d'utilisateurs qui ont des modèles de comportement respectifs similaires au modèle de référence (MR) avec un taux d'estimation supérieur à un seuil prédéterminé, et
des moyens (ANA) pour déterminer au moins un groupe d'utilisateurs qui ont communiqué entre eux parmi les utilisateurs appartenant à ladite liste (LS1), chaque utilisateur dans ledit groupe ayant communiqué avec au moins un autre utilisateur dans ledit groupe.

8. Serveur apte à communiquer avec au moins un dispositif (DC) inclus dans un réseau de télécommunications pour analyser des comportements d'utilisateurs de terminaux mobiles qui sont présents dans une zone géographique donnée et qui sont rattachés au réseau de télécommunications de type radiocommunication, **caractérisé en ce qu'**il comprend :
des moyens (COM) pour transmettre une requête (Req) incluant des coordonnées d'une zone géographique donnée et un identificateur d'un modèle de référence (MR) au dispositif (DC) afin que le dispositif récupère des informations sur des communications relatives à des utilisateurs présents dans la zone géographique donnée, produise un modèle de comportement (MC) pour chacun desdits utilisateurs en fonction des informations récupérées et compare chaque modèle de comportement produit à un modèle de référence (MR) pour déterminer une liste (LS1) d'utilisateurs qui ont des modèles de comportement respectifs similaires au modèle de référence avec un taux d'estimation supérieur à un seuil prédéterminé et déterminer au moins un groupe d'utilisateurs qui ont communiqué entre eux parmi les utilisateurs appartenant à ladite liste (LS1), chaque utilisateur dans ledit groupe ayant communiqué avec au moins un autre utilisateur dans ledit groupe, et
des moyens (COM) pour recevoir la liste (LS1) d'utilisateurs et pour commander des actions à l'encontre des utilisateurs appartenant à la liste reçue.

9. Serveur conforme à la revendication 8, **caractérisé en ce que** le serveur comprend :
des moyens (COM) pour recevoir au moins deux listes d'utilisateurs respectivement depuis deux dispositifs inclus dans des réseaux de télécommunications respectifs, et
des moyens (COR) pour déterminer au moins un groupe d'utilisateurs qui ont communiqué entre eux parmi les utilisateurs appartenant aux deux listes reçues, chaque utilisateur dans ledit groupe ayant communiqué avec au moins un autre utilisateur dans ledit groupe.

10. Serveur conforme à la revendication 9, **caractérisé en ce que** le serveur comprend des moyens (COM) pour transmettre une requête au moins à l'un des deux dispositifs afin que le dispositif ayant reçu la requête récupère des informations de géolocalisation relatives à des utilisateurs de terminaux mobiles qui sont rattachés au réseau de télécommunications dans lequel est inclus ledit dispositif et qui appartiennent audit groupe et élimine dudit groupe des utilisateurs en fonction de la position géographique des utilisateurs déduite des informations de géolocalisation récupérées.

11. Serveur conforme à la revendication 9 ou 10, **caractérisé en ce que** le serveur comprend des moyens (COM) pour transmettre une requête à l'un des deux dispositifs afin que le dispositif ayant reçu la requête récupère des informations textuelles (InfT) sur le contenu de communications relatives à des utilisateurs de terminaux mobiles qui sont rattachés au réseau de télécommunications dans lequel est inclus ledit dispositif et qui appartiennent audit groupe, et le dispositif compare les informations textuelles récupérées à un modèle de langage (ML) afin de déterminer des utilisateurs dont les informations textuelles respectives sont similaires au modèle de langage avec un taux d'estimation supérieur à un seuil prédéterminé.

12. Serveur conforme à la revendication 9 à 11, **caractérisé en ce que** le serveur comprend des moyens (COR) pour produire un modèle de comportement de groupe en fonctions des modèles de comportement (MC) des utilisateurs appartenant à un même groupe.

## Claims

1. A method for analysing the behaviour of the mobile terminal users present in a given geographical area who are connected to a readiocommunication telecommunication network, **characterised in that** it comprises the following steps on a device (DC) included within the telecommunication network:
Receiving (E1) a request (Req) including the coordinates of the given geographical area from a server (SS) and an identifier for a reference model (MR),
Retrieving (E3) communication information (InfC) from the users present in the given geographical area,
Producing (E4) a behaviour model (MC) for each of the users from the information retrieved,
Comparing (E5) each behaviour model produced (MC) with a reference model (MR) in order to determine a list (LS1) of users who have respective behaviour models that are similar to the reference model, with an estimated similarity greater than a predetermined threshold, and
Determining at least one group of users who have communicated amongst each other from among the users belonging to said list (LS1), each user in said group having communicated with at least one other user in said group.

2. A method according to claim 1, wherein the information (InfC) comes from a database comprising at least communication history information and information about the users of the telecommunication network.

3. A method according to claim 1 or 2, wherein, in response to a request sent by the server (SS), the device (DC) retrieves geolocation data (Dg) for at least some of the users belonging to said list (LS1) and eliminates users from the list based on the geographic position of the users deduced from the geolocation data retrieved.

4. A method according to claim 1 or 2, also comprising the retrieval of geolocation data (Dg) for the users present in the given geographic zone, and wherein the behaviour model (MC) is produced for each of the users based also on the geolocation data (Dg).

5. A method according to one of claims 3 and 4, also comprising the following steps within the device (DC), in response to a request sent by the server (SS):
Retrieving (E9) text information (InfT) about the content of the communication for at least some of the users belonging to said list (LS1), and
Comparing the text information retrieved with a language model (ML) to determine users whose respective text information is similar to the language model with an estimated similarity greater than a predetermined threshold.

6. A method according to claim 5, wherein the text information retrieved (InfT) is compared with a language model by semantic analysis.

7. A device (DC) included within a telecommunication network to analyse the behaviour of the mobile terminal users who are present in a given geographical area who are connected to the radiocommunication telecommunication network, **characterised in that** it comprises:
means (INT) to receive a request (Reg) including the coordinates of the given geographical area from a server (SS) and an identifier for a reference model (MR),
means (UTD) to retrieve communication information (InfC) from the users present in the given geographical area,
means (MED) to produce a behaviour model (MC) for each of the users based on the information retrieved,
means (ANA) to compare each behaviour model produced with a reference model (MR) in order to determine a list (LS1) of users who have respective behaviour models that are similar to the reference model (MR), with an estimated similarity greater than a predetermined threshold, and
means (ANA) to determine at least one group of users who have communicated amongst each other from among the users belonging to said list (LS1), each user in said group having communicated with at least one other user in said group.

8. A server capable of communicating with at least one device (DC) included within a telecommunication network to analyse the behaviour of the mobile terminal users who are present in a given geographical area and connected to a radiocommunication telecommunication network, **characterised in that** it comprises:
means (COM) to transmit a request (Req) including the coordinates of a given geographical area and an identifier for a reference model (MR) to the device (DC) so that the device can retrieve communication information for the users present in the given geographical area, produce a behaviour model (MC) for each of the users based on the information retrieved, and compare each behaviour model produced with a reference model (MR) to determine a list (LS1) of users who have similar respective behaviour models with an estimated similarity greater than a predetermined threshold, and determine at least one group of users who have communicated amongst each other from among the users belonging to said list (LS1), each user in said group having communicated with at least one other user in said group, and
means (COM) to receive the list (LS1) of users and to control the actions for the users belonging to the list received.

9. A server according to claim 8, **characterised in that** the server comprises:
means (COM) to receive at least two lists of users respectively from two devices included within respective telecommunication networks, and
means (COR) to determine at least one group of users who have communicated amongst each other from among the users belonging to the two lists received, each user in said group having communicated with at least one other user in said group.

10. A server according to claim 9, **characterised in that** the server comprises means (COM) to transmit a request to at least one of the two devices so that the device receiving the request can retrieve geolocation information for the mobile terminal users who are connected to the telecommunication network that includes said device and who belong to said group, and eliminate users from said group based on the geographic position of the users deduced from the geolocation information retrieved.

11. A server according to claim 9 or 10, **characterised in that** the server comprises means (COM) to transmit a request to one of the two devices so that the device having received the request can retrieve text information (InfT) on the content of communication from the mobile terminal users connected to the telecommunication network in which said device is included and who belong to said group, and the device compares the text information with a language model (ML) in order to determine users for which the respective text information are similar to the language model with an estimated similarity greater than a predetermined threshold.

12. A server according to one of claims 9 to 11, **characterised in that** the server comprises means (COR) to produce a group behaviour model from the behaviour models (MC) of the users belonging to the same group.

## Patentansprüche

1. Verfahren zur Analyse der Verhaltensweisen von Benutzern von mobilen Endgeräten, die sich in einer gegebenen geografischen Zone befinden und an ein Telekommunikationsnetz vom Typ Funkkommunikation angeschlossen sind, **dadurch gekennzeichnet, dass** es die folgenden Schritte in einer in dem Telekommunikationsnetz angeordneten Vorrichtung (DC) umfasst:
Empfangen (E1) einer Anfrage (Req), welche Koordinaten der gegebenen geografischen Zone enthält, von einem Server (SS), und eines Identifikators eines Referenzmodells (MR),
Erfassen (E3) von Informationen (InfC) über Kommunikationen in Bezug auf Benutzer, die sich in der gegebenen geografischen Zone befinden,
Erzeugen (E4) eines Verhaltensmodells (MC) für einen jeden der besagten Benutzer in Abhängigkeit von den erfassten Informationen,
Vergleichen (E5) jedes erzeugten Verhaltensmodells (MC) mit einem Referenzmodell (MR), um eine Liste (LS1) von Benutzern zu ermitteln, deren jeweilige Verhaltensmodelle dem Referenzmodell gleichen, mit einer Bewertungsrate, welche eine vorgegebene Grenze überschreitet, und
Ermitteln mindestens einer Gruppe von Benutzern, die miteinander kommuniziert haben, unter den Benutzern, die der besagten Liste (LS1) angehören, wobei jeder Benutzer in der besagten Gruppe mit mindestens einem anderen Benutzer in der besagten Gruppe kommuniziert hat.

2. Verfahren nach Anspruch 1, wobei die besagten Informationen (InfC) aus einer Datenbank, welche mindestens Informationen über Kommunikationsverläufe und Informationen über die Benutzer des Telekommunikationsnetzes enthält, stammen.

3. Verfahren nach Anspruch 1 oder 2, wobei die Vorrichtung (DC), in Reaktion auf eine von dem Server (SS) übertragene Anfrage, Geolokalisationsdaten (Dg) in Bezug auf mindestens einen Teil der Benutzer, die der besagten Liste (LS1) angehören, erfasst und Benutzer in Abhängigkeit von dem aus den erfassen Geolokalisationsdaten abgeleiteten geografischen Aufenthaltsort der Benutzer aus der Liste löscht.

4. Verfahren nach Anspruch 1 oder 2, weiterhin umfassend das Erfassen von Geolokalisationsdaten (Dg) in Bezug auf die Benutzer, die sich in der gegebenen geografischen Zone befinden, und wobei das Verhaltensmodell (MC) für einen jeden der besagten Benutzer weiterhin in Abhängigkeit von den Geolokalisationsdaten (Dg) erzeugt wird.

5. Verfahren nach einem der Anspruche 3 und 4, weiterhin die folgenden Schritte in der Vorrichtung (DC), in Reaktion auf eine von dem Server (SS) übertragene Anfrage, umfassend:
Erfassen (E9) von textuellen Informationen (InfT) über Kommunikationsinhalte in Bezug auf mindestens einen Teil der Benutzer, welche der besagten Liste (LS1) angehören, und
Vergleichen der erfassten textuellen Informationen mit einem Sprachmodell (ML), um diejenigen Benutzer zu ermitteln, deren jeweilige textuelle Informationen dem Sprachmodell ähnlich sind, mit einer einen vorgegebenen Grenzwert überschreitenden Bewertungsrate.

6. Verfahren nach Anspruch 5, wobei die erfassten textuellen Informationen (InfT) anhand einer semantischen Analyse mit einem Sprachmodell verglichen werden.

7. Vorrichtung (DC) in einem Telekommunikationsnetz zur Analyse der Verhaltensweisen von Benutzern von mobilen Endgeräten, die sich in einer gegebenen geografischen Zone befinden und an das Telekommunikationsnetz vom Typ Funkkommunikation angeschlossen sind, **dadurch gekennzeichnet, dass** sie umfasst:
Mittel (INT) zum Empfangen einer Anfrage (Req), welche Koordinaten der gegebenen geografischen Zone enthält, von einem Server (SS), und eines Identifikators eines Referenzmodells (MR),
Mittel (UTD) zum Erfassen von Informationen (InfC) über Kommunikationen in Bezug auf Benutzer, die sich in der gegebenen geografischen Zone befinden,
Mittel (MED) zum Erzeugen eines Verhaltensmodells (MC) für einen jeden der besagten Benutzer in Abhängigkeit von den erfassten Informationen,
Mittel (ANA) zum Vergleichen eines jeden erzeugten Verhaltensmodells mit einem Referenzmodell (MR), um eine Liste (LS1) von Benutzern, deren jeweilige Verhaltensmodelle dem Referenzmodell gleichen, mit einer Bewertungsrate, welche eine vorgegebene Grenze überschreitet, und
Mittel (ANA) zum Ermitteln mindestens einer Gruppe von Benutzern, die miteinander kommuniziert haben, unter den Benutzern, die der besagten Liste (LS1) angehören, wobei jeder Benutzer in der besagten Gruppe mit mindestens einem anderen Benutzer in der besagten Gruppe kommuniziert hat.

8. Server, dazu ausgelegt, mit mindestens einer Vorrichtung (DC) in einem Telekommunikationsnetz zu kommunizieren, um die Verhaltensweisen von Benutzern von mobilen Endgeräten, die sich in einer gegebenen geografischen Zone befinden und an das Telekommunikationsnetz vom Typ Funkkommunikation angeschlossen sind, zu analysieren, **dadurch gekennzeichnet, dass** er umfasst:
Mittel (COM) zum Übertragen einer Anfrage (Req), welche Koordinaten einer gegebenen geografischen Zone und einen Indikator eines Referenzmodells (MR) enthält, an die Vorrichtung (DC), damit die Vorrichtung Informationen über Kommunikationen in Bezug auf Benutzer, die sich in der gegebenen geografischen Zone aufhalten, erfasst, ein Verhaltensmodell (MC) für einen jeden der besagten Benutzer in Abhängigkeit von den erfassten Informationen erzeugt und jedes erzeugte Verhaltensmodell mit einem Referenzmodell (MR) vergleicht, um eine Liste (LS1) von Benutzern, deren jeweilige Verhaltensmodelle dem Referenzmodell gleichen, mit einer Bewertungsrate, welche eine vorgegebene Grenze überschreitet, und mindestens eine Gruppe von Benutzern, die miteinander kommuniziert haben, unter den Benutzern, die der besagten Liste (LS1) angehören, zu Ermitteln, wobei jeder Benutzer in der besagten Gruppe mit mindestens einem anderen Benutzer in der besagten Gruppe kommuniziert hat, und
Mittel (COM) zum Empfangen der Liste (LS1) von Benutzern, und zum Befehlen von Aktionen gegenüber Benutzern, die der empfangenen Liste angehören.

9. Server nach Anspruch 8, **dadurch gekennzeichnet, dass** der Server umfasst:
Mittel (COM) zum Empfangen von mindestens zwei Benutzerlisten jeweils von zwei Vorrichtungen in jeweiligen Telekommunikatiorisnetzen, und
Mittel (COR) zum Ermitteln mindestens einer Gruppe von Benutzern, die miteinander kommuniziert haben, unter den Benutzern, die den zwei empfangenen Listen angehören, wobei jeder Benutzer in der besagten Gruppe mit mindestens einem anderen Benutzer in der besagten Gruppe kommuniziert hat.

10. Server nach Anspruch 9, **dadurch gekennzeichnet, dass** der Server Mittel (COM) umfasst, um an mindestens eine der beiden Vorrichtungen eine Anfrage zu übertragen, damit die Vorrichtung, die die Anfrage empfangen hat, Geolokalisationsinformationen in Bezug auf Benutzer von mobilen Endgeräten, die an das Telekommunikationsnetz, in welchem die besagte Vorrichtung angeordnet ist, angeschlossen sind und der besagten Gruppe angehören, erfasst und Benutzer in Abhängigkeit von dem von den erfassten Geolokalisationsinformationen abgeleiteten geografischen Aufenthaltsort der Benutzer aus der besagten Gruppe von Benutzern löscht.

11. Server nach Anspruch 9 oder 10, **dadurch gekennzeichnet, dass** der Server Mittel (COM) umfasst, um an eine der beiden Vorrichtungen eine Anfrage zu übertragene, damit die Vorrichtung, welche die Anfrage empfangen hat, textuelle Informationen (InfT) über den Inhalt der Kommunikationen in Bezug auf Benutzer von mobilen Endgeräten, die an das Telekommunikationsnetz, in welchem die besagte Vorrichtung angeordnet ist, angeschlossen sind und der besagten Gruppe angehören, erfasst, und dass die Vorrichtung die erfassten textuellen Informationen mit einem Sprachmodell (ML) vergleicht, um Benutzer, deren jeweilige textuelle Informationen dem Sprachmodell ähnlich sind, mit einer Bewertungsrate, welche eine vorgegebene Grenze überschreitet, zu ermitteln.

12. Server nach Anspruch 9 bis 11, **dadurch gekennzeichnet, dass** der Server Mittel (COR) zum Erzeugen eines Gruppenverhaltensmodells in Abhängigkeit von Verhaltensmodellen (MC) der Benutzer, die einer selben Gruppe angehören, umfasst.
